# EUROPEAN PATENT APPLICATION

(11) **EP 3 893 225 A1**
(43) Date of publication of application: **13.10.2021**
(21) Application number: 19892083.7
(22) Date of filing: 27.11.2019
(51) Int. Cl.: G09B 9/00, G09B 23/30

(54) **CARDIAC SIMULATOR**

(30) Priority: 03.12.2018 JP 2018226404
(71) Applicant: ASAHI INTECC CO., LTD., Seto-shi, Aichi 489-0071 (JP)
(72) Inventor: NAMIMA Satoshi, Seto-shi, Aichi 489-0071 (JP); NAKADA Masakazu, Seto-shi, Aichi 489-0071 (JP)
(74) Representative: Winter, Brandl - Partnerschaft mbB
(86) International application number: PCT/JP2019/046356
(87) International publication number: WO 2020/116276

(57) **Abstract**

Provided is a heart simulator including a heart model simulating a heart, a cardiovascular model arranged so as to be adjacent to the heart model, and a flow path forming portion. The flow path forming portion is disposed near an opening at a distal end of the cardiovascular model, and forms a diffusive flow path simulating capillary vessels on a surface of the heart by diffusing a fluid flowing out of the opening.

## Description

### TECHNICAL FIELD

The present invention relates to a heart simulator.

### BACKGROUND ART

Medical devices such as catheters are used for low invasive treatments or examinations of living-body lumens such as the circulatory system and the digestive system. For example, Patent Literature 1, Patent Literature 2, and Patent Literature 3 disclose simulators (a simulated human body or a simulated blood vessel) with which an operator such as a medical practitioner can simulate procedures using these medical devices.

### CITATION LIST

### Patent Literature

Patent Literature 1: Japanese Patent Laid-Open No. 2012-68505
Patent Literature 2: Japanese Patent Laid-Open No. 2014-228803
Patent Literature 3: Japanese Patent Laid-Open No. 2017-53897

### SUMMARY OF THE INVENTION

### TECHNICAL PROBLEM

When treatment or examination is performed using a catheter, angiography may be used in order to determine hemodynamics such as blood flow velocity and blood viscosity or an occluded state of a blood vessel. In angiography, a contrast agent with low radiolucency is injected through a catheter inserted into a blood vessel to perform radiography. An operator can determine hemodynamics and vascular conditions by investigating changed contrast in the resulting X-ray images (still pictures or video) to elucidate how the contrast agent flows.

For this reason, the flow of a contrast agent in a simulator (a simulated human body or a simulated blood vessel) needs to be as similar as possible to the actual flow in the living body. To this end, in a simulated human body described in Patent Literature 1 where a simulated left coronary artery and a simulated right coronary artery are connected to a reservoir space inside a heart model, a contrast agent is diluted in the reservoir space. However, the technology described in Patent Literature 1 has a problem in that dilution of a highly concentrated contrast agent is time-consuming. Meanwhile, in a simulator described in Patent Literature 2, a contrast agent is directed to a flow path formed to have a shape which simulates a vein. However, the technology described in Patent Literature 2 has a problem in that a contrast agent flows into a flow path without being diluted, resulting in images which do not reflect actual conditions depending on observation angles. Meanwhile, Patent Literature 3 does not even consider use of a contrast agent.

The present invention is made in order to solve at least partially the aforementioned problems. An object of the present invention is to provide a heart simulator enabling the flow of a contrast agent during use of the contrast agent to simulate the actual living body.

### MEANS FOR SOLVING THE PROBLEM

The present invention is made in order to solve at least partially the above problems, and can be implemented according to the following aspects.

(1) According to one aspect of the present invention, provided is a heart simulator. This heart simulator includes a heart model simulating the heart; a cardiovascular model arranged so as to be adjacent to the heart model; and a flow path forming portion disposed near an opening at a distal end of the heart model and forming a diffusive flow path simulating capillary vessels on a surface of the heart by diffusing a fluid flowing from the opening.

According to this configuration, the heart simulator includes a flow path forming portion which forms a diffusive flow path simulating capillary vessels on the surface of the heart by diffusing a fluid flowing from the opening of the cardiovascular model. This enables the flow of a contrast agent (X-ray images) in the heart simulator of this configuration during use of the contrast agent to simulate the actual living body where a contrast agent spreads along arterioles on the surface of the heart, and then diffuses over arterioles to disappear.

(2) In the heart simulator according to the above aspect, the flow path forming portion may include a porous body having a plurality of pores. According to this configuration, the flow path forming portion includes a porous body having a plurality of pores. The porous body can function as a diffusive flow path (a buffering flow path) for dispersing the pressure and flow rate of a contrast agent flowing into the cardiovascular model. This enables the flow of the contrast agent during use of the contrast agent to simulate the actual living body where a contrast agent spreads along arterioles on the surface of the heart, and then diffuses over arterioles to disappear.

(3) In the heart simulator according to any one of the above aspects, the flow path forming portion may further include an elastic body filling the pores of the porous body. In the above configuration where the flow path forming portion further include an elastic body filling the pores of the porous body, each of the pores of the porous body can be blocked while the pressure inside the cardiovascular model is low, and each of the pores of the porous body can be opened when the pressure inside the cardiovascular model increases due to inflow of the contrast agent. This configuration, therefore, can prevent backflow of a fluid present outside the heart simulator into the cardiovascular model through each of the pores of the porous body when the heart simulator is used, for example, under a wet condition where the heart simulator is immersed into a fluid (water, physiological saline, and the like).

(4) In the heart simulator according to any one of the above aspects, the flow path forming portion may further include a pericardium portion with a film-like shape covering a surface of the heart model, and the distal end of the cardiovascular model and the porous body may be housed in a space between an inner surface of the pericardium portion and the surface of the heart model. According to this configuration, the flow path forming portion further includes the pericardium portion with a film-like shape covering the surface of the heart model, and the distal end of the cardiovascular model and the porous body are housed in the space between the inner surface of the pericardium portion and the surface of the heart model. The flow path forming portion of this configuration, therefore, enables the pericardium portion to simulate the lateral pericardium and fibrous pericardium in the actual living body, and also enables the space between the inner surface of the pericardium portion and the surface of the heart model to simulate the pericardial cavity in the actual living body. For these reasons, the heart simulator of this configuration enables the flow of a contrast agent during use of the contrast agent to simulate the actual living body much more realistically.

(5) In the heart simulator according to any one of the above aspects, at least a part of the cardiovascular model may be fixed to the inner surface of the pericardium portion. According to this configuration where at least a part of the cardiovascular model is fixed to the inner surface of the pericardium portion, the cardiovascular model and the pericardium portion can be maintained in a desired relative position.

(6) In the heart simulator according to any one of the above aspects, the density of the pores in the porous body of the flow path forming portion may be higher at a distal end side than at a proximal end side. According to this configuration where the density of the pores in the porous body is higher at the distal end side than at the proximal end side, the amount of outflow and diffusion of a contrast agent can be larger at the distal end side than at the proximal end side. For these reasons, the heart simulator of this configuration enables the flow of a contrast agent during use of the contrast agent to simulate the actual living body much more realistically.

(7) In the heart simulator according to any one of the above aspects, the flow path forming portion may include a pericardium portion with a film-like shape housing the distal end of the cardiovascular model and covering the surface of the heart model; and a plurality of granular bodies placed in a space between the inner surface of the pericardium portion and the surface of the heart model. According to this configuration, the flow path forming portion includes the pericardium portion with a film-like shape housing the distal end of the cardiovascular model and covering the surface of the heart model; and the plurality of granular bodies placed in the space between the inner surface of the pericardium portion and the surface of the heart model. The plurality of granular bodies, which can function as a diffusive flow path where a contrast agent flowing out of the distal end of the cardiovascular model is diffused along a surface thereof or gaps between the granular bodies, enables the flow of the contrast agent during use of the contrast agent to simulate the actual living body where a contrast agent spreads along arterioles on the surface of the heart, and then diffuses over arterioles to disappear.

(8) In the heart simulator according to any one of the above aspects, at least a part of the cardiovascular model may be fixed to the inner surface of the pericardium portion. According to this configuration where at least a part of the cardiovascular model is fixed to the inner surface of the pericardium portion, the cardiovascular model and the pericardium portion can be maintained in a desired relative position.

(9) In the heart simulator according to any one of the above aspects, the diameters of the granular bodies in the flow path forming portion may be heterogeneous. According to this configuration where the diameters of the granular bodies in the flow path forming portion are heterogeneous, the diffusive flow paths for a contrast agent can be heterogeneous as well. For these reasons, the heart simulator of this configuration enables the flow of a contrast agent during use of the contrast agent to simulate the actual living body much more realistically.

It is noted that the present invention can be implemented according to various aspects. For example, the prevent invention may be implemented according to the following aspects: a heart model, a cardiovascular model, a heart simulator including the heart model and the cardiovascular model, a human body simulating apparatus including at least a part of these, and a method of controlling the human body simulating apparatus.

### BRIEF DESCRIPTION OF THE DRAWINGS

Fig. 1 shows a schematic configuration of a human body simulating apparatus.
Fig. 2 shows a schematic configuration of the human body simulating apparatus.
Fig. 3 shows a schematic configuration of an aortic model.
Fig. 4 shows a schematic configuration of a model.
Fig. 5 shows a schematic configuration of a model.
Fig. 6 shows a schematic configuration of a heart simulator.
Fig. 7 shows a schematic configuration of the heart simulator.
Fig. 8 shows a diagram of a porous body.
Fig. 9 is a diagram illustrating how a contrast agent is diffused.
Fig. 10 shows a schematic configuration of a heart simulator according to a second embodiment.
Fig. 11 shows a schematic configuration of the heart simulator according to the second embodiment.
Fig. 12 is a diagram illustrating how a contrast agent is diffused.
Fig. 13 shows a schematic configuration of a heart simulator according to a third embodiment.
Fig. 14 shows a diagram of a porous body included in a flow path forming portion according to a fourth embodiment.
Fig. 15 shows a diagram of a porous body included in a flow path forming portion according to a fifth embodiment.
Fig. 16 shows a diagram of a porous body included in a flow path forming portion according to a sixth embodiment.
Fig. 17 is a diagram illustrating how a contrast agent is diffused in a flow path forming portion according to a seventh embodiment.

### EMBODIMENTS OF THE INVENTION

### First embodiment

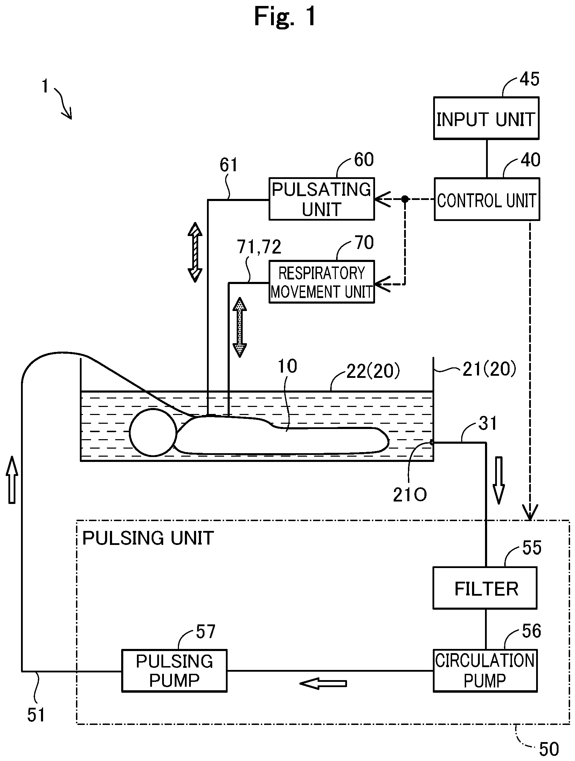

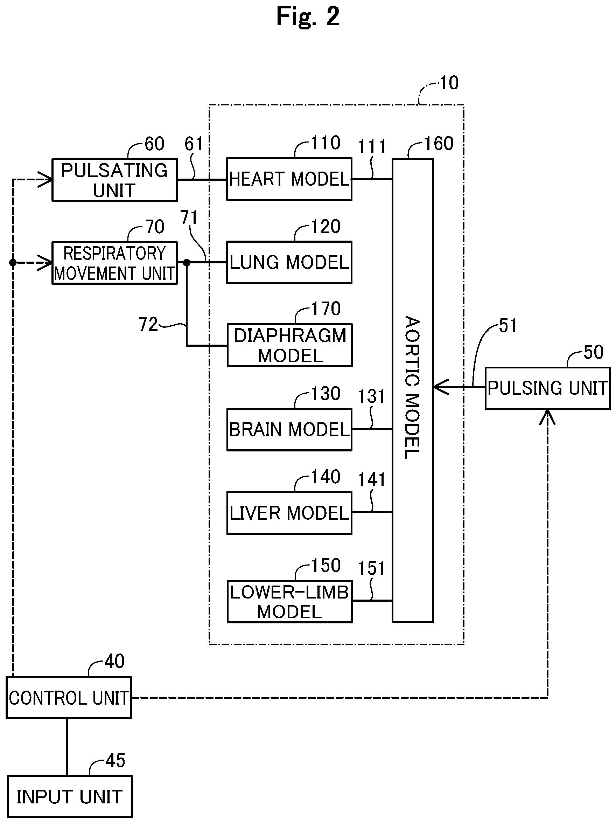

Figs. 1 and 2 show schematic configurations of a human body simulating apparatus 1. The human body simulating apparatus 1 according to the present embodiment may be used to simulate procedures for treating or examining living-body lumens such as the circulatory system, the digestive system, and the respiratory system of the human body using medical devices for low invasive treatment or examination such as catheters and guide wires. The human body simulating apparatus 1 includes a model 10, a housing 20, a control unit 40, an input unit 45, a pulsing unit 50, a pulsating unit 60, and a respiratory movement unit 70.

As shown in Fig. 2, the model 10 includes a heart model 110 simulating the human heart, a lung model 120 simulating the lung, a diaphragm model 170 simulating the diaphragm, a brain model 130 simulating the brain, a liver model 140 simulating the liver, a lower-limb model 150 simulating the lower limbs, and an aortic model 160 simulating the aorta. Hereinafter, the heart model 110, the lung model 120, the diaphragm model 170, the brain model 130, the liver model 140, and the lower-limb model 150 may also be collectively called a "biological model." The lung model 120 and the diaphragm model 170 may also be collectively called a "respiratory-organ model." Each of the biological models except for the lung model 120 and the diaphragm model 170 is connected to the aortic model 160. The model 10 will be described in detail below.

The housing 20 includes a tank 21 and a cover 22. The tank 21 is a substantially rectangular parallelepiped tank having an opening at the top. As shown in Fig. 1, the model 10 is placed on the bottom of the tank 21 which has been filled with a fluid to immerse the model 10 under the fluid. According to the present embodiment, water (liquid) is used as the fluid to maintain the model 10 in a wet condition as in the actual human body. It is noted that other liquids (for example, physiological saline, aqueous solutions of any compounds, and the like) may be used as the fluid. The fluid filled in the tank 21 will be uptaken into the inside of the aortic model 160 and others of the model 10 to function as a "blood simulate" which simulates blood.

The cover 22 is a plate-shaped member for covering the opening of the tank 21. The cover 22 can function as a wave-cancelling plate by placing the cover 22 so that one surface of the cover 22 is brought into contact with the fluid while the other is exposed to the air. This can prevent decreased visibility due to waving of the fluid inside the tank 21. The tank 21 and the cover 22 according to the present embodiment, which are formed with a radiolucent and highly transparent synthetic resin (for example, acrylic resin), can improve the visibility of the model 10 from the outside. It is noted that the tank 21 and the cover 22 may be formed with another synthetic resin, or may be formed with different materials.

The control unit 40 includes CPU, ROM, RAM, and a storage unit, and can control operations of the pulsing unit 50, the pulsating unit 60, and the respiratory movement unit 70 by deploying and running a computer program stored in the ROM in the RAM. The input unit 45 may be an interface of any kind used for a user to input information into the human body simulating apparatus 1. The input unit 45 may be, for example, a touch screen, a keyboard, an operation button, an operation dial, a microphone, or the like. Hereinafter, a touch screen is used as an illustrative example of the input unit 45.

The pulsing unit 50 is a "fluid supplying unit" which can discharge a pulsed fluid to the aortic model 160. Specifically, the pulsing unit 50 can circulate and pass a fluid in the tank 21 through the aortic model 160 of the model 10 as indicated by the open arrow in Fig. 1. The pulsing unit 50 according to the present embodiment include a filter 55, a circulation pump 56, and a pulsing pump 57. The filter 55 is connected to an opening 210 of the tank 21 through a tubular body 31. The filter 55 can filter a fluid passing through the filter 55 to remove impurities (for example, a contrast agent used during procedures) in the fluid. The circulation pump 56 may be, for example, a non-positive displacement centrifugal pump, and can circulate a fluid coming from the tank 21 through the tubular body 31 at a constant flow rate.

The pulsing pump 57 may be, for example, a positive-displacement reciprocating pump, and can add a pulse to the fluid discharged from the circulation pump 56. The pulsing pump 57 is connected to the aortic model 160 of the model 10 through a tubular body 51 (Fig. 2). Therefore, a fluid discharged from the pulsing pump 57 is passed to the inner cavity of the aortic model 160. It is noted that a rotary pump operated at a low speed may be used as the pulsing pump 57 instead of a reciprocating pump. Further, the filter 55 and the circulation pump 56 may be omitted. The tubular body 31 and the tubular body 51 are flexible tubes formed with a synthetic resin (for example, silicone and the like) of a radiolucent soft material.

The pulsating unit 60 can cause the heart model 110 to pulsate. Specifically, the pulsating unit 60 can expand the heart model 110 by discharging a fluid into the inner cavity of the heart model 110, and can contract the heart model 110 by withdrawing the fluid from the inner cavity of the heart model 110 as indicated by the hatched arrow in Fig. 1. The pulsating unit 60 can repeat these discharging and withdrawing operations to create pulsating movements (expansion and contraction movements) of heart model 110. A fluid which can be used with the pulsating unit 60 (hereinafter referred to as an "expansion medium") may be a liquid like a blood simulate, or may be, for example, a gas such as air. An expansion medium is preferably an organic solvent such as benzene and ethanol or a radiolucent liquid such as water. The pulsating unit 60 may be implemented by using, for example, a positive-displacement reciprocating pump. The pulsating unit 60 is connected to the aortic model 110 of the model 10 through a tubular body 61 (Fig. 2). The tubular body 61 is a flexible tube formed with a synthetic resin (for example, silicone and the like) of a radiolucent soft material.

The respiratory movement unit 70 enables the lung model 120 and the diaphragm model 170 to simulate respiratory movements. Specifically, the respiratory movement unit 70 can discharge a fluid to an inner cavity of the lung model 120 and the diaphragm model 170 as indicated by the dot-hatched arrow in Fig. 1 to expand the lung model 120 and contract the diaphragm model 170. Further, the respiratory movement unit 70 can withdraw a fluid from the inner cavity of the lung model 120 and the diaphragm model 170 to contract the lung model 120 and relax the diaphragm model 170. The respiratory movement unit 70 can repeat these discharging and withdrawing operations to generate respiratory movements of the lung model 120 and the diaphragm model 170. A fluid which can be used with the respiratory movement unit 70 may be a liquid like a blood simulate, or may be, for example, a gas such as air. The respiratory movement unit 70 can be implemented by using, for example, a positive-displacement reciprocating pump. The respiratory movement unit 70 is connected to the lung model 120 of the model 10 through a tubular body 71, and connected to the diaphragm model 170 through a tubular body 72 (Fig. 2). The tubular bodies 71, 72 are flexible tubes formed with a synthetic resin (for example, silicone and the like) of a radiolucent soft material.

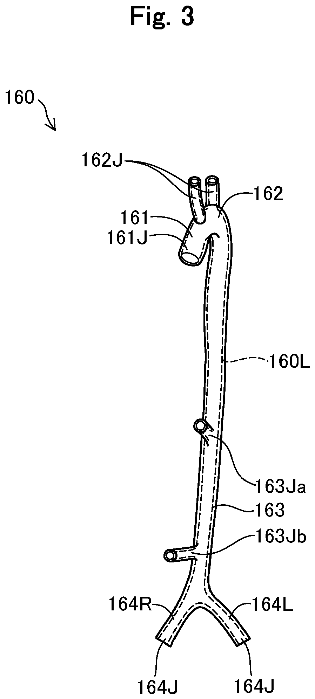

Fig. 3 shows a schematic configuration of the aortic model 160. The aortic model 160 is composed of components which simulate those of the human aorta, i.e., an ascending aorta portion 161 which simulates the ascending aorta, an aortic arch portion 162 which simulates the aortic arch, an abdominal aorta portion 163 which simulates the abdominal aorta, and a common iliac aorta portion 164 which simulates the common iliac aorta.

The aortic model 160 includes a second connection portion 161J for connection with the heart model 110 at an end portion of the ascending aorta portion 161. Similarly, it includes a first connection portion 162J for connection with the brain model 130 in the vicinity of the aortic arch portion 162, a third connection portion 163Ja for connection with the liver model 140 in the vicinity of the abdominal aorta portion 163, and a pair of fourth connection portions 164J for connection with the right and left lower-limb models 150, respectively, at an end portion of the common iliac aorta portion 164. It is noted that the second connection portion 161J may be arranged at the ascending aorta portion 161 or in the vicinity thereof, and the fourth connection portions 164J may be arranged at the common iliac aorta part 164 or in the vicinity thereof. Hereinafter, the first to fourth connection portions 161J to 164J may also be collectively called a "biological-model connection portion." Further, the aortic model 160 includes a fluid supplying unit connection portion 163Jb for connection with the pulsing unit 50 in the vicinity of the abdominal aorta portion 163. It is noted that the fluid supplying unit connection portion 163Jb may be arranged at any location including in the vicinity of the ascending aorta portion 161, in the vicinity of the cerebral vascular model 131 (for example, the common carotid artery), and the like, but not limited to the abdominal aorta portion 163. Further, the aortic model 160 may include a plurality of fluid supplying unit connection portions 163Jb arranged at different locations.

Further, an inner cavity 160L is formed inside the aortic model 160. The inner cavity 160L has an opening for each of the aforementioned biological-model connection portions and fluid supplying unit connection portion (the first connection portion 162J, the second connection portion 161J, the third connection portion 163Ja, the pair of fourth connection portions 164J, and the fluid supplying unit connection portion 163Jb). The inner cavity 160L can function as a flow path for transporting a blood simulate (a fluid) passed from the pulsing unit 50 to the heart model 110, the brain model 130, the liver model 140, and the lower-limb models 150.

The aortic model 160 according to the present embodiment may be formed with a synthetic resin (for example, polyvinyl alcohol (PVA), silicone, and the like) of a radiolucent soft material. In particular, use of PVA is preferred in that the hydrophilicity of PVA enables a user to feel the aortic model 160 immersed under a liquid as if it were the actual human aorta in the body.

The aortic model 160 may be produced, for example, as follows. First, a mold is prepared which simulates the shape of the human aorta. The mold may be produced by, for example, 3D-printing using data of the aorta in the human model data generated by analyzing images from CT (Computed Tomography) or MRI (Magnetic Resonance Imaging) of a human body. The model may be of gypsum, metal, or resin. Next, a liquefied synthetic resin material may be applied on the inner surface the model prepared. After cooled and cured, the synthetic resin material is demolded. In this way, the aortic model 160 having the inner cavity 160L can easily be produced.

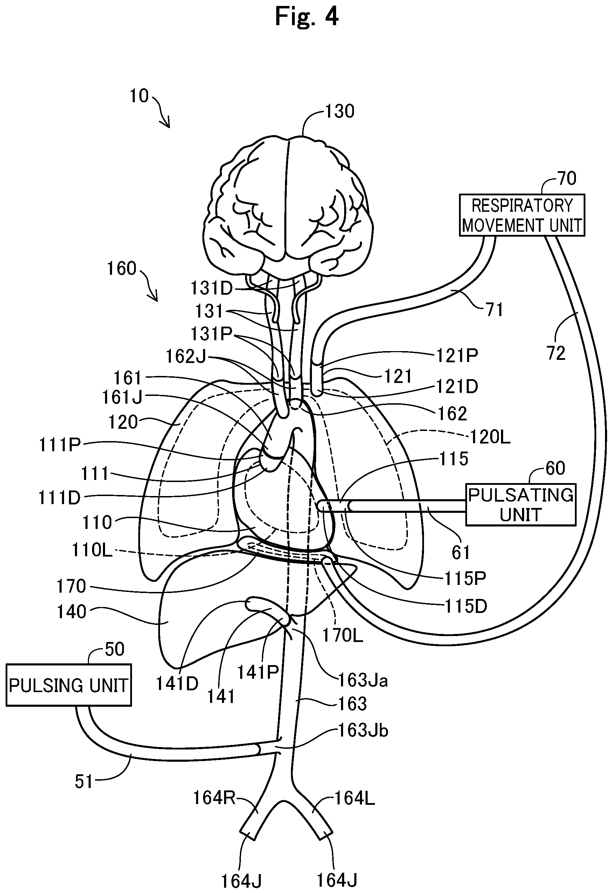

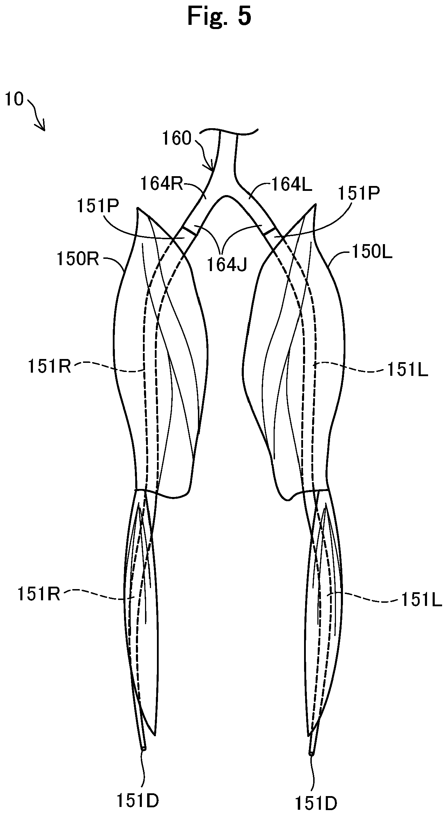

Figs. 4 and 5 shows a schematic configuration of the model 10. As shown in Fig. 4, the heart model 110 has a shape simulating the heart, and has an inner cavity 110L formed thereinside. The heart model 110 according to the present embodiment may be formed with a synthetic resin (for example, silicone and the like) of a radiolucent soft material, and may be produced by applying a synthetic resin material on the inner surface of a mold prepared based on human body data, and then demolding it as in the aortic model 160. Further, the heart model 110 includes a tubular body 115, and is connected to a cardiovascular model 111. The cardiovascular model 111 is a tubular vascular model which simulates a part of the ascending aorta and the coronary artery, and may be formed with a synthetic resin (for example, PVA, silicone, and the like) of a radiolucent soft material. The tubular body 115 is a flexible tube formed with a synthetic resin (for example, silicone and the like) of a radiolucent soft material. The tubular body 115 is connected so that a distal end 115D is in communication with the inner cavity 110L of the heart model 110, and a proximal end 115P is in communication with the tubular body 61 leading to the pulsating unit 60.

The lung models 120 each have a shape which simulate either the right or left lung, and have one inner cavity 120L formed thereinside which is in communication with the right lung and the left lung. The lung models 120 are arranged so as to cover the right and left sides of the heart model 110. The lung models 120 may be produced using a similar material and method as in the heart model 110. The lung models 120 may be made of the same material as the heart model 110, or may be made of different materials. Further, the lung model 120 is connected to a tracheal model 121 which is tubular, and simulates a part of the trachea. The tracheal model 121 may be produced using a similar material as the tubular body 115 of the heart model 110. The tracheal model 121 may be made of the same material as the tubular body 115, or may be made of a different material. The tracheal model 121 is connected so that a distal end 121D is in communication with the inner cavity 120L of the lung model 120, and a proximal end 121P is in communication with the tubular body 71 leading to the respiratory movement unit 70.

The diaphragm model 170 has a shape which simulates the diaphragm, and has an inner cavity 170L formed thereinside. The diaphragm model 170 is arranged below the heart model 110 (in other words, arranged at the opposite side of the brain model 130 across the heart model 110). The diaphragm model 170 may be produced using a similar material and method as in the heart model 110. The diaphragm model 170 may be made of the same material as the heart model 110, or may be made of a different material. Further, the tubular body 72 leading to the respiratory movement unit 70 is connected to the diaphragm model 170 so that the inner cavity 170L of the diaphragm model 170 is in communication with an inner cavity of the tubular body 72.

The brain model 130 has a shape which simulates the brain, and is configured to be solid without having an inner cavity. The brain model 130 is arranged above the heart model 110 (in other words, arranged at the opposite side of the diaphragm model 170 across the heart model 110). The brain model 130 may be produced using a similar material and method as in the heart model 110. The brain model 130 may be made of the same material as the heart model 110, or may be made of a different material. Further, the brain model 130 is connected to the cerebral vascular model 131 which is a tubular vascular model simulating at least a part of the main arteries including a pair of the right and left vertebral arteries from a pair of the right and left common carotid arteries. The cerebral vascular model 131 may be produced using a similar material as the cardiovascular model 111 of the heart model 110. The cerebral vascular model 131 may be made of the same material as the cardiovascular model 111, or may be made of a different material. Further, although not shown, the cerebral vascular model 131 may simulate not only an artery but also a major vein including the superior cerebral vein and the straight sinus.

It is noted that the brain model 130 may be a complex further including a bone model which simulates the human cranium and cervical vertebrae. For example, a cranium model may have a hard resin case simulating the parietal bone, temporal bone, occipital bone, and sphenoid bone; and a lid simulating the frontal bone. A cervical vertebrae model may have a plurality of rectangular resin bodies each having a through-hole thereinside through which a vascular model can pass. When included, the bone model may be produced with a resin having a hardness different from an organ model such as a vascular model and a brain model. For example, the cranium model may be produced with acrylic resin while a cervical vertebrae model may be produced with PVA.

The cerebral vascular model 131 is configured such that a distal end 131D is connected to the brain model 130, and a proximal end 131P is connected to the first connection portion 162J of the aortic model 160 (which corresponds to, for example, the brachiocephalic artery, the subclavian artery, or the vicinity thereof in the human body). The distal end 131D of the cerebral vascular model 131 may simulate a vertebral artery passing through the vertebrae and a different blood vessel arranged on the surface and/or in the inside of the brain model 130 (for example, the posterior cerebral artery, the middle cerebral artery), or may further simulate the posterior communicating artery, and be connected to a peripheral portion of the common carotid artery. Further, the proximal end 131P of the cerebral vascular model 131 is connected to the first connection portion 162J so that an inner cavity of the cerebral vascular model 131 is in communication with the inner cavity 160L of the aortic model 160.

The liver model 140 has a shape which simulates the liver, and is configured to be solid without having an inner cavity. The liver model 140 is arranged below the diaphragm model 170. The liver model 140 may be produced using a similar material and method as in the heart model 110. The liver model 140 may be made of the same material as the heart model 110, or may be made of a different material. Further, the liver model 140 is connected to a hepatic vascular model 141 which is a tubular vascular model simulating a part of the hepatic blood vessel. The hepatic vascular model 141 may be produced using a similar material as the cardiovascular model 111 of the heart model 110. The hepatic vascular model 141 may be made of the same material as the cardiovascular model 111, or may be made of a different material.

The hepatic vascular model 141 is configured so that a distal end 141D is connected to the liver model 140, and a proximal end 141P is connected to the third connection portion 163Ja of the aortic model 160. The distal end 141D of the hepatic vascular model 141 may simulate a different blood vessel arranged on the surface and/or the inside of the liver model 140 (for example, the hepatic artery). Further, the proximal end 141P of the hepatic vascular model 141 is connected to the third connection portion 163Ja so that an inner cavity of the hepatic vascular model 141 is in communication with the inner cavity 160L of the aortic model 160.

As shown in Fig. 5, the lower-limb model 150 includes a lower-limb model 150R for the right leg and a lower-limb model 150L for the left leg. The lower-limb models 150R and 150L, which have the same configuration except for constructive symmetry, hereinafter shall be described interchangeably as "the lower-limb model 150." The lower-limb model 150 has a shape which simulates at least a part of the major tissues such as quadriceps and crural tibialis anterior muscle in the thigh, peroneus longus, and extensor digitorum longus muscle, and is configured to be solid without having an inner cavity. The lower-limb model 150 may be produced using a similar material and method as in the heart model 110. The lower-limb model 150 may be made of the same material as the heart model 110, or may be made of a different material. Further, the lower-limb model 150 is connected to a lower-limb vascular model 151 (the lower limb vascular models 151R, 151L) which is a tubular vascular model simulating at least a part of the main artery from a femoral artery to the dorsalis pedis artery. The lower-limb vascular model 151 may be produced using a similar material as the cardiovascular model 111 of the heart model 110. The lower-limb vascular model 151 may be made of the same material as the cardiovascular model 111, or may be made of a different material. Further, the lower-limb vascular model 151 may simulate not only arteries but also the main vein from the common iliac vein to the great saphenous vein although not shown.

The lower-limb vascular model 151 is arranged so as to extend through the inside of the lower-limb model 150 in the extending direction from the thigh toward the side of the crus. The lower-limb vascular model 151 is configured such that a distal end 151D is exposed at a lower end (which corresponds to a portion from the tarsal portion to the acrotarsium portion) of the lower-limb model 150, and a proximal end 151P is connected to the fourth connection portion 164J of the aortic model 160. Here, the proximal end 151P is connected to the fourth connection portion 164J so that an inner cavity of the lower-limb vascular model 151 is in communication with the inner cavity 160L of the aortic model 160.

It is noted that the cardiovascular model 111, the cerebral vascular model 131, the hepatic vascular model 141, and the lower-limb vascular model 151 as described above may also be collectively called a "partial vascular model." Further, the partial vascular models and the aortic model 160 may also be collectively called a "vascular model." These configurations enable a partial vascular model arranged on the surface of each of a biological model to simulate, for example, the posterior cerebral artery on the brain, the left and right coronary arteries on the heart, or the like. Further, these enable a partial vascular model arranged in the inside of each of a biological model to simulate, for example, the middle cerebral artery in the brain, the hepatic artery in the liver, the femoral artery in the lower limb, and the like.

In the human body simulating apparatus 1 according to the present embodiment, at least one or more biological models (the heart model 110, the lung model 120, the diaphragm model 170, the brain model 130, the liver model 140, the lower-limb model 150) can be attached to or detached from the aortic model 160 to configure the model 10 according to various aspects. A combination of the biological models (the heart model 110, the lung model 120, the diaphragm model 170, the brain model 130, the liver model 140, the lower-limb model 150) to be attached to the aortic model 160 can be appropriately changed depending on an organ required for a procedure. For example, the model 10 having the heart model 110 and the lower-limb model 150 attached can be used for simulating a procedure of the TFI (Trans-Femoral Intervention) approach of PCI with the human body simulating apparatus 1. In addition to these, all of the biological models except for the lower-limb model 150, for example, may be attached, or the heart model 110 and the lung model 120 may be attached, or the lung model 120 and the diaphragm model 170 may be attached, or the liver model 140 alone may be attached, or the lower-limb model 150 alone may be attached.

As described above, in the human body simulating apparatus 1 according to the present embodiment, a biological model (the heart model 110, the brain model 130, the liver model 140, the lower-limb model 150) which simulates a part of the inside of the human body may be connected to a biological-model connection portion (the first connection portions 162J, the second connection portion 161J, the third connection portion 163Ja, the fourth connection portion 164J) to simulate various procedures for a living-body lumen of each of an organ such as the circulatory system and the digestive system using a medical device such as a catheter and a guide wire depending on the connected biological model(s). Further, biological models can be detachably attached to the biological-model connection portions 161J to 164J, and thus a biological model which is not used for that procedure may also be removed and stored separately. This can improve convenience.

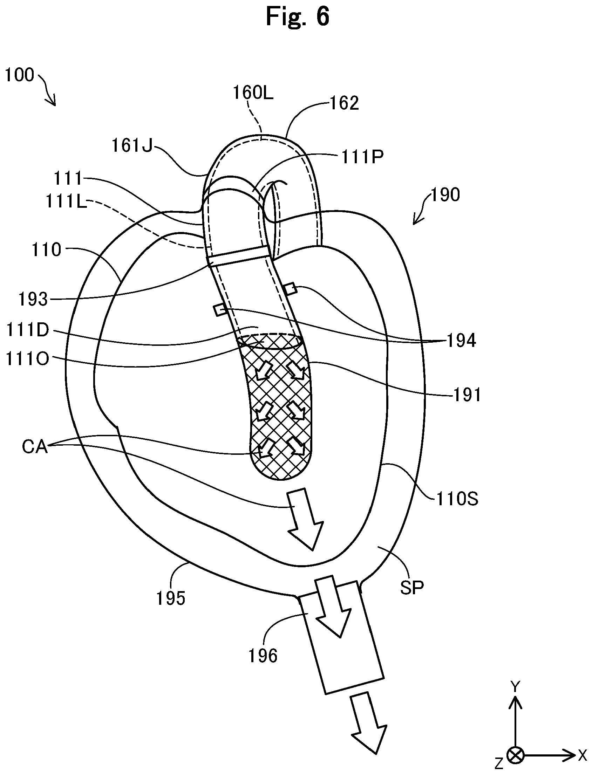

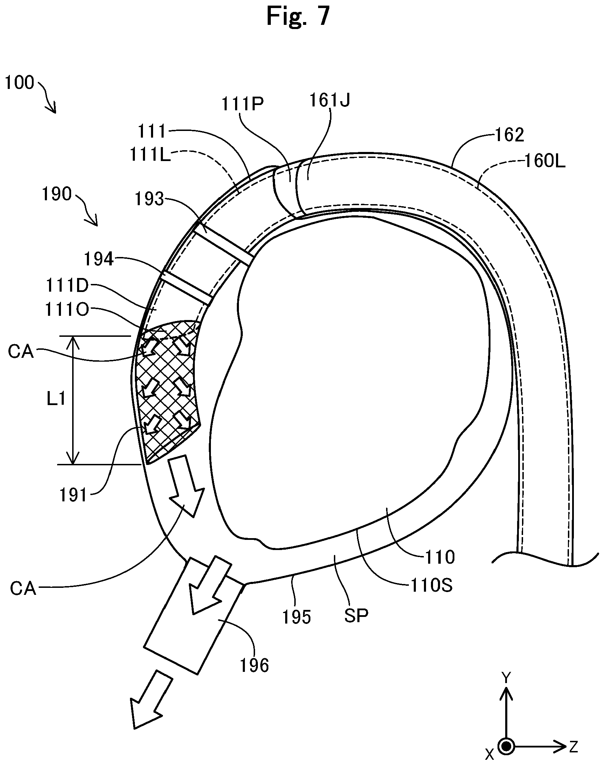

Figs. 6 and Fig. 7 show a schematic configuration of a heart simulator 100. The heart simulator 100 further includes a flow path forming portion 190 in addition to the heart model 110 and the cardiovascular model 111 which are described with reference to Fig. 4. The flow path forming portion 190 forms a diffusive flow path simulating capillary vessels on the surface of the human heart, and includes a porous body 191, a first fixing portion 193, a second fixing portion 194, a pericardium portion 195, and a tubular body 196.

The XYZ axes orthogonally intersecting to each other are shown in Figs. 6 and 7. The X-axis corresponds to the lateral direction (the width direction) of the heart model 110, and the Y-axis corresponds to the height direction of the heart model 110, and the Z-axis corresponds to the depth direction of the heart model 110. In Figs. 6 and 7, the upper side (the +Y axis direction) corresponds to a "proximal side", and the lower side (the -Y axis direction) corresponds to a "distal side." In the cardiovascular model 111 and each of the constituent components of the flow path forming portion 190, the proximal side (the +Y axis direction) may also be referred to a "proximal end side," and the end portion of the proximal side may also be referred to a "proximal end portion" or simply a "proximal end." Similarly, the distal side (the -Y axis direction) may also be referred to a "distal end side," and the end portion of the distal side may also be referred to as a "distal end portion" or simply a "distal end." It is noted that in Figs. 6 and 7, the inner cavity 110L of the heart model 110, the tubular body 115, and the first connection portion 162J as described above are not shown.

In the heart simulator 100, the cardiovascular model 111 is arranged so as to be adjacent to the heart model 110 (Fig. 7). A proximal end 111P of the cardiovascular model 111 is connected to the second connection portion 161J of the aortic model 160 so that an inner cavity 111L of the cardiovascular model 111 is in communication with the inner cavity 160L of the aortic model 160. Further, an opening 111O in communication with the inner cavity 111L is formed at a distal end 111D of the cardiovascular model 111, and the porous body 191 is disposed near the opening 111O.

The first fixing portion 193 fixes at least a portion of the heart model 110 and at least a portion of the cardiovascular model 111 together. In the present embodiment, the first fixing portion 193 is a strip-shaped member formed with a synthetic resin (for example, silicone and the like) of a radiolucent soft material, and fixed to the heart model 110 at the both ends via an adhesive such as an epoxy adhesive, and has a middle portion through which the cardiovascular model 111 is inserted, thereby fixing the heart model 110 and the cardiovascular model 111. The first fixing portion 193 may have any configuration. For example, it may be an adhesive filled in a gap between the heart model 110 and the cardiovascular model 111.

The pericardium portion 195 is a member with a film-like shape covering a surface 110S of the heart model 110. The pericardium portion 195 has a pouch-like shape formed with a synthetic resin (for example, silicone and the like) of a radiolucent soft material, and a portion of the distal end side of the cardiovascular model 111 and the porous body 191 are housed in a space SP between the inner surface of the pericardium portion 195 and the surface 110S of the heart model 110. Further, the tubular body 196 is disposed at the distal end side (the distal side) of the pericardium portion 195. The tubular body 196 is a flexible tube formed with a synthetic resin (for example, silicone and the like) of a radiolucent soft material. The tubular body 196 is connected so that a proximal end side is in communication with the space SP of the pericardium portion 195, and a distal end side in communication with the tank 21 (Fig. 1). In a situation during use as shown in Fig. 1, the space SP between the pericardium portion 195 and the heart model 110 is, therefore, filled with a fluid (a fluid present in the tank 21) flowing therein through the tubular body 196.

The second fixing portion 194 fixes at least a portion of the pericardium portion 195 and at least a portion of the cardiovascular model 111 together. In the present embodiment, the second fixing portion 194 is a strip-shaped member formed with a synthetic resin (for example, silicone and the like) of a radiolucent soft material, and fixed to the pericardium portion 195 at the both ends via an adhesive such as an epoxy adhesive, and has a middle portion through which the cardiovascular model 111 is inserted, thereby fixing the pericardium portion 195 and the cardiovascular model 111. The second fixing portion 194 may have any configuration. For example, it may be an adhesive filled in a gap between the pericardium portion 195 and the cardiovascular model 111. The second fixing portion 194 as described above can maintain the cardiovascular model 111 and the pericardium portion 195 in a desired relative position.

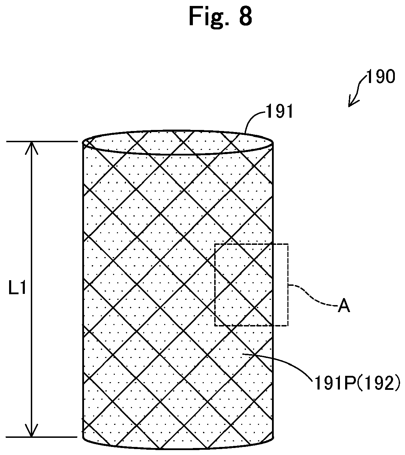

Fig. 8 shows a diagram of the porous body 191. The porous body 191 is a porous member having a plurality of pores 191P. The porous body 191 may be formed with, for example, a foam body such as a silicone foam, a urethane foam, a rubber sponge, and an acrylic foam. In the porous body 191 according to the present embodiment, the density of the pores 191P is substantially uniform from the proximal end side (the upper side in the figure, the +Y axis direction in Fig. 6) through the distal end side (the lower side in the figure, the -Y axis direction in Fig. 6). Further, the pores 191P of the porous body 191 are filled with an elastic body 192. The porous body 191 as described above can be produced by impregnating the porous body 191 with, for example, a liquefied rubber or a thermoplastic elastomer (TPE). As shown in Figs. 6 and 7, the porous body 191 is fixed to the distal end 111D of the cardiovascular model 111. It may be fixed by various methods. For example, the porous body 191 may be fit into the inner cavity 111L at the distal end side of the cardiovascular model 111, or the porous body 191 may be joined to the distal end side of the cardiovascular model 111 using an adhesive such as epoxy adhesive. Alternatively, a combination of fitting and joining may be used. A length L1 of the porous body 191 may be appropriately selected depending on the required diffusion performance of a contrast agent.

When treatment or examination using a catheter is simulated with the human body simulating apparatus 1 according to the present embodiment, angiography may be used in order to determine hemodynamics such as blood flow velocity and blood viscosity or an occluded state of a blood vessel. Angiography may be performed as follows: a catheter is inserted into a blood vessel, for example, from the common iliac aorta portion 164 (Fig. 5), and delivered to the cardiovascular model 111 through the inner cavity 160L of the aortic model 160. A low-radiolucent contrast agent is then injected through the catheter to perform radiography. An operator can determine hemodynamics and vascular conditions by investigating changed contrast in the resulting X-ray images (still pictures or video) to elucidate how the contrast agent flows.

Here, in the heart simulator 100 according to the present embodiment, the flow path forming portion 190 can form a diffusive flow path simulating capillary vessels on the surface of the human heart by diffusing a fluid (a contrast agent CA and a blood simulate) flowing out of the opening 111O at the distal end 111D of the cardiovascular model 111. Specifically, the flow path forming portion 190 includes the porous body 191 having the plurality of pores 191P. Each of the pores 191P of the porous body 191 can function as a diffusive flow path (a buffering flow path) for dispersing the pressure and flow rate of the contrast agent CA flowing into the cardiovascular model 111 as indicated by the open arrows in Figs. 6 and 7. This enables the flow of the contrast agent CA during use of the contrast agent to simulate the actual body where a contrast agent spreads along arterioles on the surface of the heart, and then diffuses over arterioles to disappear.

Further, in the heart simulator 100 according to the present embodiment, the flow path forming portion 190 further includes the pericardium portion 195 with a film-like shape covering the surface 110S of the heart model 110, and the distal end 111D of the cardiovascular model 111 and the porous body 191 are housed in the space SP between the inner surface of the pericardium portion 195 and the surface 110S of the heart model 110. This enables the pericardium portion 195 to simulate the lateral pericardium and fibrous pericardium in the actual living body, and also enables the space SP to simulate the pericardial cavity in the actual living body. Further, the contrast agent CA excreted from each of the pores 191P of the porous body 191 is not excreted directly into the tank 21 (Fig. 1), but is first excreted into the space SP to be diluted with a fluid present in the space SP, and then excreted into the tank 21 via the tubular body 196 disposed at the distal end portion of the pericardium portion 195 to be diluted with a fluid present in the tank 21. These enables the flow of the contrast agent CA during use of the contrast agent in the heart simulator 100 according to the present embodiment to simulate the actual living body much more realistically.

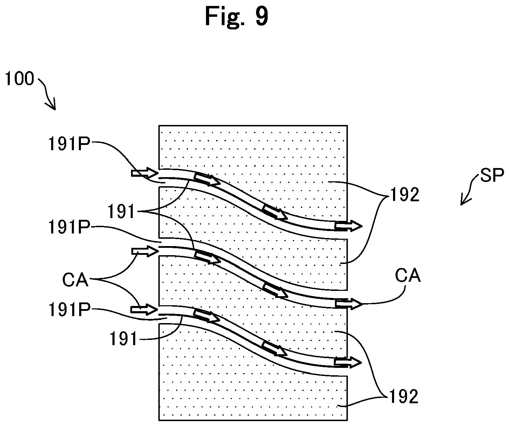

Fig. 9 is a diagram illustrating how the contrast agent CA is diffused. In the heart simulator 100 according to the present embodiment, the flow path forming portion 190 further includes the elastic body 192 filled in the pores 191P of the porous body 191. This enables each of the pores 191P of the porous body 191 to remain blocked while a blood simulates alone circulates through the aortic model 160, and the pressure inside the cardiovascular model 111 (the inner cavity 111L) is low. This also enables each of the pores 191P of the porous body 191 to open for excreting the contrast agent CA into the space SP between the pericardium portion 195 and the heart model 110 as shown in Fig. 9 when the pressure inside the cardiovascular model 111 (the inner cavity 111L) increases, for example, by injecting the contrast agent CA into the cardiovascular model 111. Consequently, the heart simulator 100 according to the present embodiment can prevent backflow of a fluid present outside the heart simulator 100 into the cardiovascular model 111 through each of the pores 191P of the porous body 191 when used in a wet condition where the heart simulator 100 is immersed into a fluid (water, physiological saline, and the like) as described above.

### Second embodiment

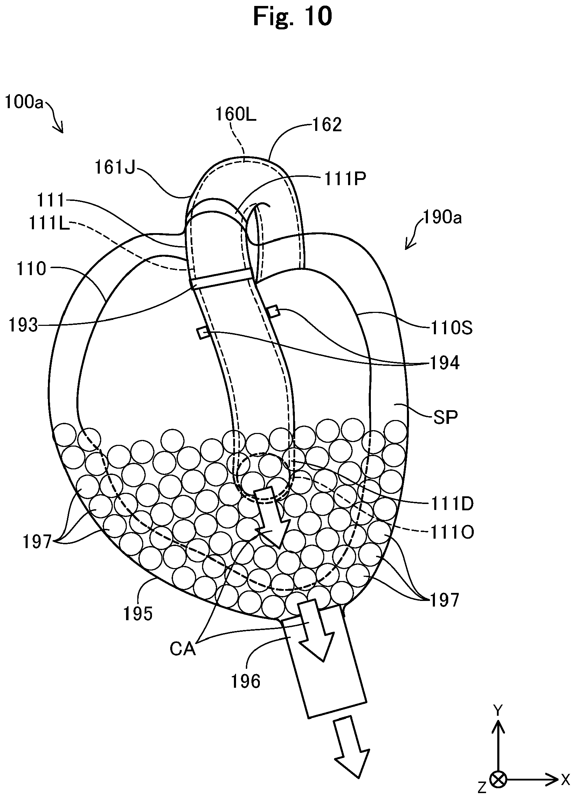

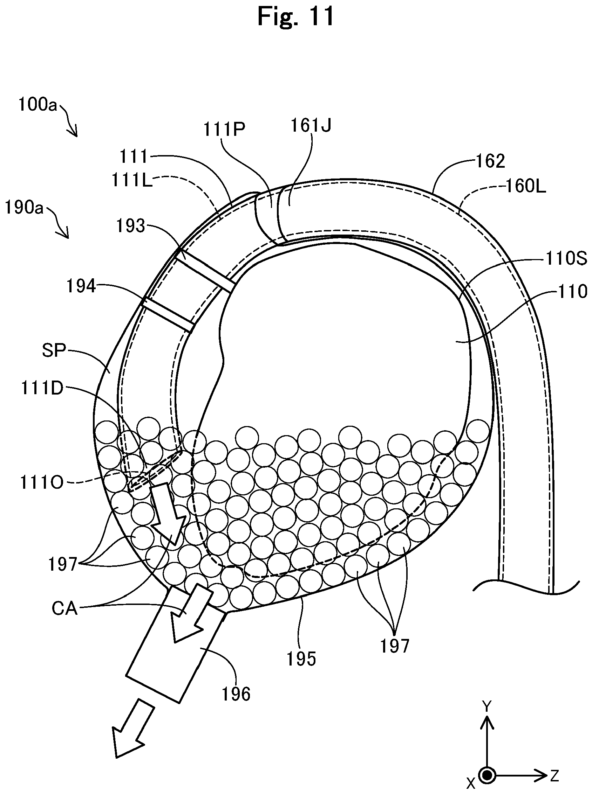

Figs. 10 and 11 show schematic configurations of a heart simulator 100a according to a second embodiment. The XYZ axes in Figs. 10 and 11 correspond to the XYZ axes in Figs. 6 and 7, respectively. The heart simulator 100a according to the second embodiment includes a flow path forming portion 190a in place of the flow path forming portion 190 described in the first embodiment. The flow path forming portion 190a forms a diffusive flow path simulating capillary vessels on the surface of the human heart as in the first embodiment, and includes a plurality of granular bodies 197 in place of the porous body 191 and the elastic body 192 (Fig. 6).

The granular bodies 197 according to the present embodiment are spherical bodies formed with a radiolucent synthetic resin (for example, acrylic resin, silicone, and the like). It is noted that the granular bodies 197 may be polyhedral instead of spherical, and may be hollow or solid. Further, the shapes of granular bodies 197 may be the same or different to each other. The plurality of granular bodies 197 are placed (housed) in the space SP between the inner surface of the pericardium portion 195 and the surface 110S of the heart model 110, and aggregate together at the lower part of the heart simulator 100 (in the -Y axis direction) due to their own weights. Consequently, the distal end 111D of the cardiovascular model 111 is buried in the plurality of granular bodies 197 (Figs. 10 and 11).

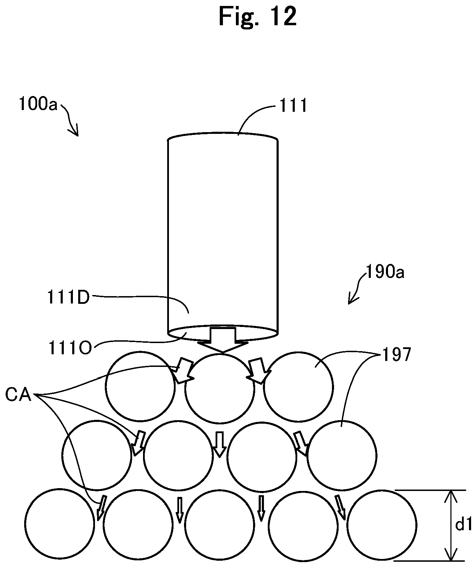

Fig. 12 is a diagram illustrating how the contrast agent CA is diffused. Again in the heart simulator 100a according to the second embodiment, the flow path forming portion 190a can form a diffusive pathway simulating capillary vessels on the surface of the human heart by diffusing a fluid (the contrast agent CA and a blood simulate) flowing out of the opening 111O at the distal end 111D of the cardiovascular model 111. Specifically, the flow path forming portion 190a includes a pericardium portion 195 with a film-like shape housing the distal end 111D of the cardiovascular model 111 and covering the surface 110S of the heart model 110; and the plurality of granular bodies 197 placed in the space SP between the inner surface of the pericardium portion 195 and the surface 110S of the heart model 110. As indicated by the open arrows in Fig. 12, the plurality of granular bodies 197 can function as a diffusive flow path in which the contrast agent CA flowing out of the distal end 111D (the opening 111O) of the cardiovascular model 111 is diffused along the surface thereof or gaps between the granular bodies. This enables the flow of the contrast agent CA during use of the contrast agent to simulate the actual body where a contrast agent spreads along arterioles on the surface of the heart, and then diffuses over arterioles to disappear.

Further, in the flow path forming portion 190a according to the second embodiment, a particle diameter d1 of each of the granular bodies 197 is substantially the same to each other, enabling the diffusive flow path for the contrast agent CA to be uniform. The size of the particle diameter d1 may be selected appropriately. Furthermore, the heart simulator 100a according to the second embodiment also includes the pericardium portion 195 simulating the lateral pericardium, fibrous pericardium, and pericardial cavity in the actual living body as in the first embodiment. Therefore, the contrast agent CA excreted from the cardiovascular model 111 can be first diluted in the space SP, and then excreted into the tank 21 (Fig. 1). This enables the flow of the contrast agent CA during use of the contrast agent to simulate the actual living body much more realistically.

### Third embodiment

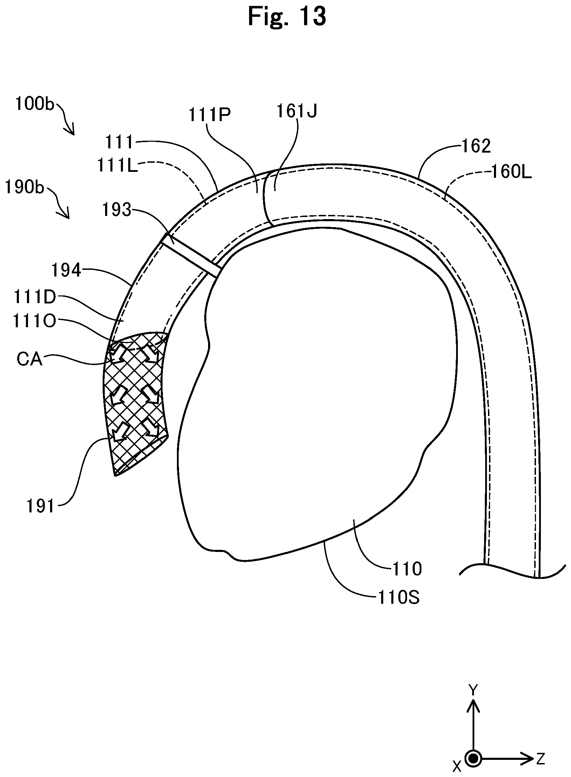

Fig. 13 shows a schematic configuration of a heart simulator 100b according to a third embodiment. The first embodiment described with reference to Fig. 7 is configured such that the heart model 110 is covered with the pericardium portion 195, and the contrast agent CA is diluted in the space SP between the heart model 110 and the pericardium portion 195, and then excreted into the tank 21. However, a flow path forming portion 190b according to the third embodiment does not include the pericardium portion 195, the tubular body 196 associated with the pericardium portion 195, nor the second fixing portion 194. In the heart simulator 100b according to the third embodiment, the contrast agent CA excreted from each of the pores 191P of the porous body 191 is directly excreted into the tank 21 (Fig. 1), and diluted with a fluid present in the tank 21. The heart simulator 100b may be configured such that the pericardium portion 195, the tubular body 196, and the second fixing portion 194 are omitted as described above. The heart simulator 100b as described above can also show similar effect as in the first embodiment.

### Fourth embodiment

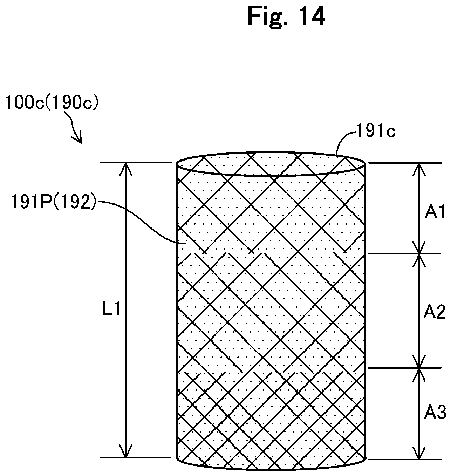

Fig. 14 shows a diagram of a porous body 191c included in a flow path forming portion 190c according to a fourth embodiment. In the first embodiment described with reference to Fig. 8, the density of the pores 191P in the porous body 191 is substantially uniform from the proximal end side through the distal end side. However, the density of the pores 191P in the porous body 191c according to the fourth embodiment is higher at the distal end side (the lower side in the figure, the -Y axis direction in Fig. 6) than at the proximal end side (the upper side in the figure, the +Y axis direction in Fig. 6). Specifically, the porous body 191c has a region A1 located at the proximal end side, a region A2 located at the substantially middle portion, and a region A3 located at the distal end side in the direction of a length L1 in which the density of the pores 191P is such that the region A3> the region A2> the region A1. It is noted that Fig. 14 merely shows an exemplified change in the density of the pores 191P. The porous body 191c may have two or more regions in the direction of the length L1 arranged so that the density of the pores 191P is higher at the distal end side. Alternatively, the porous body 191c is configured to have a density of the pores 191P which continuously changes from the proximal end side through the distal end side.

The heart simulator 100c including the flow path forming portion 190c as described above can also show similar effects as in the first embodiment. Further, in the heart simulator 100c according to the fourth embodiment, the density of the pores 191P in the porous body 191c is higher at the distal end side than at the proximal end side. Therefore, the amount of outflow and diffusion of the contrast agent CA can be larger at the distal end side than at the proximal end side. This enables the flow of the contrast agent CA during use of the contrast agent in the heart simulator 100c according to the fourth embodiment to simulate the actual living body much more realistically.

### Fifth embodiment

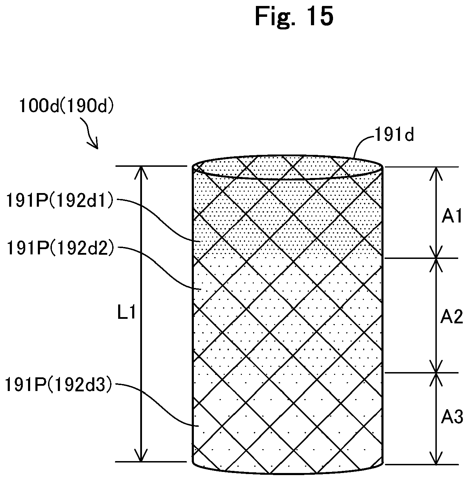

Fig. 15 shows a diagram of a porous body 191d included in a flow path forming portion 190d according to a fifth embodiment. In the first embodiment described with reference to Fig. 8, the elastic body 192 filled in the pores 191P of the porous body 191 is identical (of one type). However, the pores 191P of the porous body 191d according to the fifth embodiment are filled with a plurality of types of elastic bodies 192d so as to have different properties between the proximal end side (the upper side in the figure, the +Y axis direction in Fig. 6) and the distal end side (the lower side in the figure, the -Y axis direction in Fig. 6). Specifically, the porous body 191d has a region A1 located at the proximal end side and filled with an elastic body 192d1, a region A2 located at the substantially middle portion and filled with an elastic body 192d2, and a region A3 located at the distal end side and filled with an elastic body 192d3 in the direction of the length L1. The elastic bodies 192d1 to 192d3 have different properties to each other. It is noted that Fig. 15 merely shows an exemplified change in the density of the porous body 191d. The porous body 191d may be divided into regions having two or more types of elastic bodies 192d with different properties in the direction of the length L1. Alternatively, the properties of the elastic bodies 192d in the porous body 191d may be continually changed from the proximal end side through the distal end side. The heart simulator 100d including the flow path forming portion 190d as described above can also show similar effects as in the first and fourth embodiments.

### Sixth embodiment

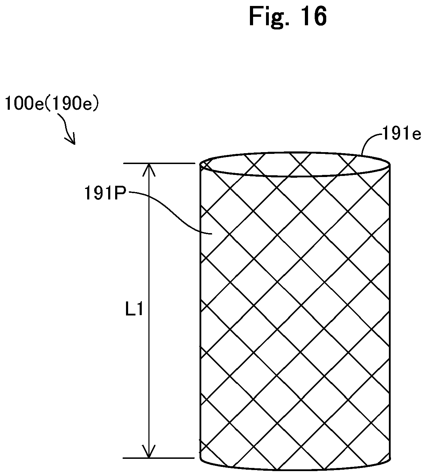

Fig. 16 shows a diagram of a porous body 191e included in a flow path forming portion 190e according to a sixth embodiment. In the first embodiment described with reference to Fig. 8, the pores 191P of the porous body 191 are filled with the elastic body 192. However, the pores 191P of the porous body 191e according to the sixth embodiment are not filled with the elastic body 192. The heart simulator 100e including the flow path forming portion 190e as described above can also show similar effects as in the first embodiment.

### Seventh embodiment

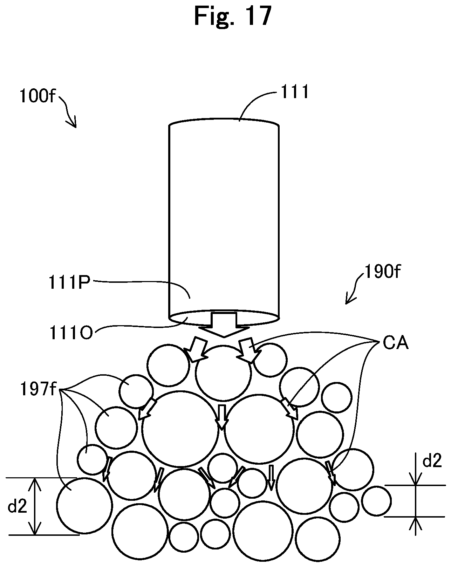

Fig. 17 is a diagram illustrating how the contrast agent CA is diffused in a flow path forming portion 190f according to a seventh embodiment. In the second embodiment described with reference to Fig. 12, the particle diameter d1 of each of the granular bodies 197 is substantially the same to each other. However, in the flow path forming portion 190f according to the seventh embodiment, each of granular bodies 197f has a different particle diameter d2. In other words, the particle diameters of the granular bodies 197f in the flow path forming portion 190f are heterogeneous. The heart simulator 100f including the flow path forming portion 190f as described above can also show similar effects as in the second embodiment. Further, in the heart simulator 100f according to the seventh embodiment where the diameters of the granular bodies 197f in the flow path forming portion 190f are heterogeneous, diffusive flow paths of the contrast agent CA can also be heterogeneous as indicated by the open arrows in Fig. 17. This enables the flow of the contrast agent CA during use of the contrast agent in the heart simulator 100f according to the seventh embodiment to simulate the actual living body much more realistically.

### Variations of present embodiment

The present invention shall not be limited to the above embodiments, but can be practiced according to various aspects without departing from the scope and spirit of the present invention. For example, the following variations may also be possible.

### Variation 1

The aforementioned first to seventh embodiments show examples of the configuration of the human body simulating apparatus 1. However, various modifications may be made to the configuration of the human body simulating apparatus. For example, the human body simulating apparatus does not need to include at least one of the tanks and the cover for covering the tank. For example, the human body simulating apparatus may include an input unit by a means other than a touch screen (for example, sound, an operation dial, a button, and the like).

### Variation 2

The aforementioned first to seventh embodiments show examples of the configuration of the model 10. However, various modifications may be made to the configuration of the model. For example, the aortic model does not need to include at least a part of the first to the fourth connection portions. For example, the arrangement of the first to fourth connection portions described above in the aortic model may be altered appropriately. The first connection portion does not need to be arranged at the aortic arch or in the vicinity thereof. Similarly, the second connection portion does not need to be arranged at the ascending aorta or in the vicinity thereof. The third connection portion does not need to be arranged at the abdominal aorta or in the vicinity thereof. The fourth connection portion does not need to be arranged at the common iliac aorta or in the vicinity thereof. For example, any number of biological-model connection portions may be used in the aortic model. A new biological-model connection portion for connecting a biological model not mentioned above (for example, a stomach model, a pancreas model, a kidney model, and the like) may be included.

For example, the model does not need to include at least a part of the heart model, the lung model, the brain model, the liver model, the lower-limb model, and the diaphragm model. When the lung model and the diaphragm model are omitted, the respiratory movement unit can also be omitted. For example, the model may be configured as a complex further including a bone model simulating at least a portion of a human bone such as rib, sternum, thoracic vertebra, lumbar vertebra, femur, and neckbone. For example, the configurations of the aforementioned heart model, lung model, brain model, liver model, lower-limb model, and diaphragm model may be altered appropriately. For example, the inner cavity of the heart model and the pulsating unit which discharges a fluid to the inner cavity of the heart model may be omitted (Fig. 4). The lung model may include separate inner cavities disposed at each of the right and left lungs (Fig. 4). The lower-limb model may further include a skin model which covers femur muscle (Fig. 5).

### Variation 3

The aforementioned first to seventh embodiments show examples of the configurations of the heart simulators 100, 100a to 100f. However, various modifications may be made to the configurations of the heart simulators. For example, at least one of a heart model and a cardiovascular model included in the heart simulator may have a model simulating a healthy heart or cardiac blood vessel and a model simulating a heart or cardiac blood vessel having a lesion site, which may be interchangeably attached. For example, the cardiovascular model may include a model simulating a vein in addition to models simulating a part of the ascending aorta and the coronary artery.

### Variation 4

The aforementioned first to seventh embodiments show examples of the configurations of the flow path forming portions 190, 190a to 190f. However, various modifications may be made to the configurations of the flow path forming portions. For example, a tubular body disposed at the pericardium portion may be omitted. In that case, a communication hole may be disposed at the lower portion of the pericardium portion (in the vicinity of the apex of the heart model) to allow communication between the inside and outside of the pericardium. For example, the pericardium portion may be configured so as to cover at least a part of the heart model (for example, the lower half from the right and left ventricles through the apex) instead of covering the entire surface of the heart model. For example, at least one of the first fixing portion and the second fixing portion may be omitted.

For example, the granular bodies may be arranged so as to fill at least the vicinity of the opening at the distal end of the cardiovascular model, but not necessarily be arranged throughout the lower portion of the pericardium portion as shown in Fig. 11. For example, the flow path forming portion may further include a restriction portion which restricts the movement of the granular bodies in the space between the heart model and the pericardium portion. The restriction portion may be configured in any way. Examples can include an adhesive adhering granular body together, a mesh member disposed between granular bodies to restrict the movements of the granular bodies, an element wire-shaped member linking granular bodies together in a row so as to be inserted through each of through-holes formed in the granular bodies, and the like.

### Variation 5

The configurations of the human body simulating apparatuses and the heart simulators according to the first to seventh embodiments and the configurations of the human body simulating apparatuses and the heart simulators according to the variations 1 to 4 may be combined in an appropriate manner.

In the above, the present aspects are described based on embodiments and variations. However, the embodiments of the aforementioned aspects are provided merely for clear understanding of the present aspects, and should not be construed as limiting to the present aspects. The present aspects can be altered or modified without departing from the spirit thereof and the claims. The present aspects include any equivalents thereto. Further, the technical features thereof, if not indicated as essential in the present specification, may be appropriately deleted.

### DESCRIPTION OF REFERENCE NUMERALS

1 Human body simulating apparatus
10 Model
20 Housing
21 Tank
22 Cover
31 Tubular body
40 Control unit
45 Input unit
50 Pulsing unit
51 Tubular body
55 Filter
56 Circulation pump
57 Pulsing pump
60 Pulsating unit
61 Tubular body
70 Respiratory movement unit
71 Tubular body
72 Tubular body
100, 100a to f Heart simulator
110 Heart model
111 Cardiovascular model
115 Tubular body
120 Lung model
121 Tracheal model
130 Brain model
131 Cerebral vascular model
140 Liver model
141 Hepatic vascular model
150, 150L, R Lower-limb model
151, 151L, R Lower limb vascular model
160 Aortic model
161 Ascending aorta portion
161J Second connection portion
162 Aortic arch portion
162J First connection portion
163 Abdominal aorta portion
163Ja Third connection portion
163Jb Fluid supplying unit connection portion
164 Common iliac aorta portion
164J Fourth connection portion
170 Diaphragm model
190, 190a to f Flow path forming portion
191, 191c, d, e Porous body
192, 192d Elastic body
193 First fixing portion
194 Second fixing portion
195 Pericardium portion
196 Tubular body
197, 197f Granular bodies

## Claims

1. A heart simulator, comprising:
a heart model simulating a heart;
a cardiovascular model disposed so as to be adjacent to the heart model; and
a flow path forming portion disposed near an opening at a distal end of the cardiovascular model and forming a diffusive flow path simulating capillary vessels on a surface of the heart by diffusing a fluid flowing out of the opening.

2. The heart simulator according to claim 1, wherein:
the flow path forming portion includes
a porous body having a plurality of pores.

3. The heart simulator according to claim 2, wherein:
the flow path forming portion further includes
an elastic body filled in the pores of the porous body.

4. The heart simulator according to claim 2 or 3, wherein:
the flow path forming portion further includes
a pericardium portion with a film-like shape covering a surface of the heart model,
the distal end of the cardiovascular model and the porous body being housed in a space between an inner surface of the pericardium portion and the surface of the heart model.

5. The heart simulator according to claim 4, wherein:
at least a part of the cardiovascular model is fixed to the inner surface of the pericardium portion.

6. The heart simulator according to any one of claims 2 to 5, wherein:
the density of the pores in the porous body of the flow path forming portion is higher at a distal end side than at a proximal end side.

7. The heart simulator according to claim 1, wherein:
the flow path forming portion includes
a pericardium portion with a film-like shape housing the distal end of the cardiovascular model and covering the surface of the heart model, and
a plurality of granular bodies placed in a space between an inner surface of the pericardium portion and the surface of the heart model.

8. The heart simulator according to claim 7, wherein:
at least a part of the cardiovascular model is fixed to the inner surface of the pericardium portion.

9. The heart simulator according to claim 7 or 8, wherein:
the diameters of the granular bodies in the flow path forming portion are heterogeneous.
